# EUROPÄISCHE PATENTANMELDUNG

(11) **EP 4 123 899 A1**
(43) Veröffentlichungstag der Anmeldung: **25.01.2023**
(21) Anmeldenummer: 21187350.0
(22) Anmeldetag: 23.07.2021
(51) Int. Cl.: H02P 23/14, H04L 67/125

(54) **VERFAHREN ZUR OPTIMIERUNG EINES BETRIEBS EINER DYNAMOELEKTRISCHEN MASCHINE**

(71) Anmelder: Siemens Aktiengesellschaft, 80333 München (DE)
(72) Erfinder: Siering, Till-Christian, 91301 Forchheim (DE); Nolting, Christoph, 91315 Höchstadt/Aisch (DE)

(57) **Zusammenfassung**

Die Erfindung betrifft ein Verfahren zur Optimierung eines Betriebs einer dynamoelektrischen Maschine (1) mit folgenden Schritten: Anfrage von Korrekturdaten für die dynamoelektrische Maschine (1) durch einen Client (41) von einem Server (6); Übermitteln einer Identifikationsnummer durch den Client an den Server (6), insbesondere über das Internet, durch den Client (41) an den Server (6); Übermitteln der Korrekturdaten durch den Server (6) an den Client (41); Betreiben der dynamoelektrischen Maschine (1) in Abhängigkeit der erhaltenen Korrekturdaten.

## Beschreibung

Die Erfindung betrifft ein Verfahren zur Optimierung eines Betriebs einer dynamoelektrischen Maschine.

Elektromotoren weisen häufig Welligkeiten in ihrer Drehzahl und ihrem Drehmoment auf, welche z.B. bei permanentmagneterregten Synchronmaschinen durch Rastmomente hervorgerufen werden. Auch andere Fertigungstoleranzen können einen Rundlauf der Maschine beeinträchtigen.

Dies kann zu Qualitätseinbußen in der Anwendung des Elektromotors führen. Am Beispiel von Werkzeugmaschinen kann sich dies mit einer mangelnden Oberflächenqualität der gefertigten Teile zeigen.

Um Störgrößen auszugleichen, werden die Elektromotoren in der Fertigung vermessen und Korrekturdaten in einer Geberelektronik des Elektromotors gespeichert.

Hierfür wird jedoch ein ausreichender Speicherplatz benötigt.

Der Erfindung liegt die Aufgabe zugrunde, einen Elektromotor dahingehend zu verbessern.

Die Lösung der Aufgabe gelingt durch Anspruch 1, d. h. ein Verfahren zur Optimierung eines Betriebs einer dynamoelektrischen Maschine mit folgenden Schritten:
- Anfrage von Korrekturdaten für die dynamoelektrische Maschine durch einen Client von einem Server,
- Übermitteln einer Identifikationsnummer, insbesondere über das Internet, durch den Client an den Server,
- Übermitteln der Korrekturdaten durch den Server an den Client,
- Betreiben der dynamoelektrischen Maschine in Abhängigkeit der erhaltenen Korrekturdaten.

Die Identifikationsnummer ist vorteilhaft eine eindeutige Kennung für eine bestimmte Maschine oder einen bestimmten Maschinentyp bzw. Maschinenmodell.

Die Korrekturdaten weisen vorteilhaft Kompensationsdaten zum Ausgleich der Drehzahl- und Drehmomentwelligkeit von dynamoelektrischen Maschinen, insbesondere Elektromotoren, und/oder zur Kompensation von Fertigungstoleranzen der elektrischen Maschine auf.

Die Korrekturdaten werden während und/oder nach der Fertigung der Maschine z. B. durch Messungen bestimmt und vorteilhaft in einer Datenbank abgelegt. Inhalte der Datenbank können vorteilhaft durch den Server abgerufen werden.

Die Erfindung bietet den Vorteil, dass hierfür kein teurer Speicher, insbesondere ein Speicher im Geber, benötigt wird.

Die Erfindung ist von Vorteil, dass keine Eigen- bzw. Auftragsentwicklungen zur Erweiterung eines Speicherplatzes im Geber nötig ist. Es können Standard-Geber eingesetzt werden.

Die dynamoelektrische Maschine wird auf Basis der Korrekturdaten betrieben.

Die Erfindung bietet den Vorteil, dass Welligkeiten der Drehzahl und des Drehmoments reduziert bzw. kompensiert werden und somit ein optimaler Rundlauf der dynamoelektrischen Maschine gewährleistet wird.

So können beispielsweise Werkzeugmaschinen, die dieses Verfahren anwenden, eine gute Oberflächenqualität gewährleisten.

Vorteilhaft ist eine Ausführung, wonach die Identifikationsnummer eine Seriennummer der dynamoelektrischen Maschine aufweist.

Die Identifikationsnummer kann auch die Seriennummer der Maschine sein.

Die Seriennummer ist von Vorteil, da die Serie eindeutig für ein Unikat ist. Die Seriennummer ist eine eindeutige Kennung für die Maschine.

Die Korrekturdaten weisen vorteilhaft Daten zur Reduktion und/oder Kompensation von Fertigungstoleranzen, Drehmomentwelligkeit, Drehzahlwelligkeit und/oder Nutrastmoment auf.

Die Lösung der Aufgabe gelingt zudem durch einen Antrieb zur Durchführung des Verfahrens, aufweisend eine dynamoelektrische Maschine und einen Umrichter.

Vorteilhaft weist der Umrichter den Client auf.

Der Client ist vorteilhaft in einer Umrichter-Software realisiert.

Die Lösung der Aufgabe gelingt zudem durch ein System, aufweisend einen derartigen Antrieb und einen Server.

Der Antrieb und der Server sind vorzugsweise über das Internet verbunden.

Im Folgenden wird die Erfindung anhand der in den Figuren gezeigten Ausführungsbeispiele näher beschrieben und erläutert. Es zeigen:
- FIG 1: eine Interaktion eines Systems,
- FIG 2: ein System,
- FIG 3: Verfahrensschritte.

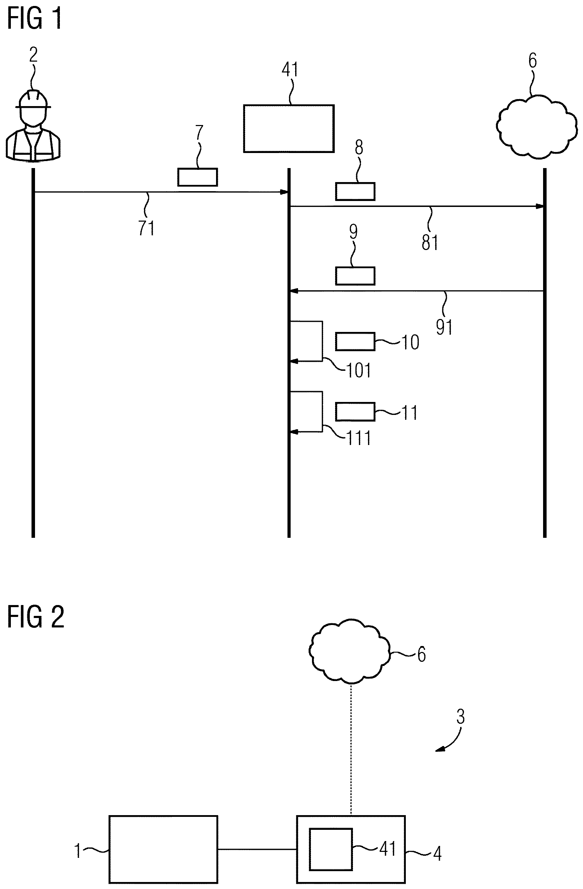

FIG 1 zeigt eine Interaktion eines Systems 3 (siehe FIG 2).

Ein Antrieb wird in der Figur durch eine Person 2 in Betrieb genommen. Auch andere Inbetriebnahme-Arten sind möglich.

Die Person 2 beginnt die Inbetriebnahme 7, indem eine Umrichter-Software 41 angesprochen wird, dargestellt durch Pfeil 71.

Die Umrichter-Software 41 stellt eine Anfrage 8 an einen Server 6, dargestellt durch Pfeil 81. Durch die Anfrage 8 werden Korrekturdaten für eine bestimmte Maschine angefragt. Dies gelingt dadurch, dass eine Identifikationsnummer zur Identifikation der Maschine übermittelt wird.

Der Server 6 ist vorteilhaft als Webserver ausgebildet.

Die Identifikationsnummer ist vorteilhaft eine Seriennummer der dynamoelektrischen Maschine.

Vorteilhaft ist eine zeitgleiche Übermittlung von Anfrage und Identifikationsnummer.

Eine beispielhafte Anfrage 8 kann sein:
Request_Compensation_Data(Serialnumber)

Der Server übermittelt die Korrekturdaten an den Client, dargestellt durch Pfeil 91.

Eine beispielhafte Antwort 9 kann sein:
Send_Compensation_Data(Serialnumber)

Vorteilhaft fließen die Korrekturdaten in eine Regelung der Maschine ein.

Die dynamoelektrische Maschine wird auf Basis der Korrekturdaten optimiert.

Die Optimierung 10 gelingt in der Figur innerhalb der Umrichter-Software 41, dargestellt durch Pfeil 101, beispielsweise durch: Optimize_Motor_Control(Compensation_Data).

Die dynamoelektrische Maschine wird auf Basis der Korrekturdaten betrieben. Der Betrieb gelingt in der Figur innerhalb der Umrichter-Software 42, dargestellt durch Pfeil 111, beisielsweise durch: Operate_Motor(Compensation_Data)

FIG 2 zeigt das System 3.

Das System 3 weist in der Figur eine dynamoelektrische Maschine 1 und einen Umrichter 4 auf. Der Umrichter 4 weist die Umrichter-Software 41 auf.

Die dynamoelektrische Maschine 1 und der Umrichter 4 sind miteinander verbunden.

Der Umrichter 4 ist mit dem Server 6 verbunden, vorteilhaft über das Internet.

In anderen Worten: Die Korrekturdaten liegen in der Cloud.

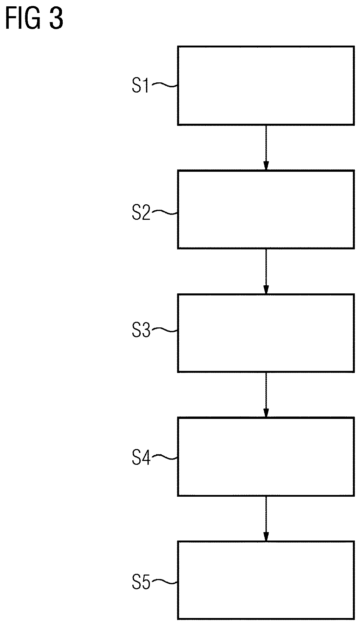

FIG 3 zeigt die Verfahrensschritte.

In einem Verfahrensschritt S1 erfolgt die Inbetriebnahme. Das Verfahren ist jedoch auch für den Betrieb nach der Inbetriebnahme geeignet.

In einem Verfahrensschritt S2 werden die Korrekturdaten angefragt. Die Inverter-Software 41 fragt in FIG 1 die Korrekturdaten vom Server 6 an.

In einem Verfahrensschritt S3 werden die Korrekturdaten übermittelt. Der Server übermittelt gem. FIG 1 die Korrekturdaten an die Inverter-Software 41.

In einem Verfahrensschritt S4 wird die dynamoelektrische Maschine auf Basis der Korrekturdaten optimiert,

In einem Verfahrensschritt S5 wird die dynamoelektrische Maschine auf Basis der Korrekturdaten betrieben.

Die Erfindung bietet den Vorteil, dass der Bedarf für den Speicherplatz in der Geberelektronik entfällt, wenn im Rahmen der Inbetriebnahme des Motors die Korrekturdaten mit Hilfe des Servers, insbesondere eines Servers des Herstellers der Maschine, in die Regelung geladen werden.

Die Erfindung bietet den Vorteil, dass ein Standard-Portfolio eines Geber-Herstellers eingesetzt und mit dem beschriebenen Verfahren prinzip- oder fertigungsbedingte Störgrößen korrigiert werden können. Es ist nicht nötig, Standard-Zulieferteile (insbesondere Geber) anzupassen.

Im Reparaturfall des Gebers entfällt eine Neuprogrammierung des Gebers mit den Korrekturdaten, da diese vorteilhaft in einer Datenbank gespeichert sind und erneut abgerufen werden können.

Vorteilhaft ist eine Anfrage an einen Webservice durch den Client. Der Webservice leitet vorteilhaft die Bearbeitung der Anfrage an einen Webserver weiter.

Vorteilhaft wird das Unikat, also die Maschine 1, vermessen und die aus der Vermessung gewonnenen Korrekturdaten und in einem Webservice zur Verfügung gestellt.

Bei der Inbetriebnahme lädt vorzugsweise der Umrichter zur optimierten Regelung die Korrekturdaten herunter.

## Patentansprüche

1. Verfahren zur Optimierung eines Betriebs einer dynamoelektrischen Maschine (1) mit folgenden Schritten:
- Anfrage von Korrekturdaten für die dynamoelektrische Maschine (1) durch einen Client (41) von einem Server (6),
- Übermitteln einer Identifikationsnummer durch den Client an den Server (6), insbesondere über das Internet, durch den Client (41) an den Server (6),
- Übermitteln der Korrekturdaten durch den Server (6) an den Client (41),
- Betreiben der dynamoelektrischen Maschine (1) in Abhängigkeit der erhaltenen Korrekturdaten.

2. Verfahren nach Anspruch 1, wobei die Identifikationsnummer eine Seriennummer der dynamoelektrischen Maschine (1) aufweist.

3. Verfahren nach einem der vorhergehenden Ansprüche, wobei die Korrekturdaten Daten zur Reduktion und/oder Kompensation von Fertigungstoleranzen, Drehmomentwelligkeit, Drehzahlwelligkeit und/oder Nutrastmoment aufweisen.

4. Antrieb zur Durchführung des Verfahrens nach einem der Ansprüche 1 bis 3, aufweisend eine dynamoelektrische Maschine (1) und einen Umrichter (4).

5. Antrieb nach Anspruch 4, wobei der Umrichter (4) den Client (41) aufweist.

6. System (3), aufweisend einen Antrieb nach einem der Ansprüche 4 oder 5 und einen Server (6).

7. System (3) nach Anspruch 6, wobei der Antrieb und der Server (6) über das Internet verbunden sind.
